# EUROPEAN PATENT SPECIFICATION

(11) **EP 3 061 785 B1**
(45) Date of publication and mention of the grant of the patent: **18.12.2019**
(21) Application number: 14855602.0
(22) Date of filing: 21.10.2014
(51) Int. Cl.: B29K 263/00, B29C 43/28, B29L 7/00, B29B 15/12, B29C 33/68, C08J 5/24

(54) **PREPREG PRODUCTION METHOD**
VERFAHREN ZUR HERSTELLUNG VON PREPREGS
PROCÉDÉ DE FABRICATION DE PRÉIMPRÉGNÉ

(30) Priority: 22.10.2013 JP 2013219394
(43) Date of publication of application: 31.08.2016
(73) Proprietor: Mitsubishi Chemical Corporation, Tokyo 100-8251 (JP)
(72) Inventor: MIYAUCHI Akira, Toyohashi-shi Aichi 440-8601 (JP); SAMEJIMA Tadao, Toyohashi-shi Aichi 440-8601 (JP); ICHINO Masahiro, Toyohashi-shi Aichi 440-8601 (JP); TERANISHI Takuya, Toyohashi-shi Aichi 440-8601 (JP)
(74) Representative: Hoffmann Eitle
(86) International application number: PCT/JP2014/077945
(87) International publication number: WO 2015/060299

(56) References cited:
- WO-A1-2008/000917
- WO-A2-2014/091001
- JP-A- H0 376 613
- JP-A- H0 376 613
- JP-A- H04 189 110
- JP-A- H04 189 110
- JP-A- H07 258 440
- JP-A- 2005 014 600
- JP-A- 2005 146 006
- JP-A- 2010 076 249
- JP-A- 2013 060 515
- JP-A- 2013 060 515
- JP-A- 2014 015 563
- JP-A- 2014 018 993
- JP-U- S49 115 469
- US-A- 5 552 214

## Description

### Field of the Invention

The present invention relates to a method for producing prepreg to be used as fiber-reinforced composite material. The present application is based upon and claims the benefit of priority to Japanese Patent Application No. 2013-219394, filed October 22, 2013. The entire contents of the application are incorporated herein by reference.

### Background Art

Since fiber-reinforced composite material is lightweight and has excellent mechanical properties, it is widely used in structural applications such as aircraft, vehicles, ships and buildings as well as sporting goods applications such as golf shafts, fishing rods and tennis rackets.

To produce fiber-reinforced composite material, methods that use cloth prepreg and unidirectional prepreg are widely employed. Cloth prepreg is produced by impregnating a matrix resin composition into a cloth made by weaving reinforcing fiber bundles. Unidirectional prepreg is produced by aligning multiple fiber bundles in one direction to make a reinforcing fiber sheet and then impregnating a matrix resin composition into the reinforcing fiber sheet. Examples of matrix resin compositions are thermosetting and thermoplastic resins. Especially, thermosetting resins are often used.

At the time of producing prepreg, pressure impregnation methods are generally employed; such methods include hot melt extrusion, that is, where a matrix resin composition and a reinforcing fiber sheet are laminated, sandwiched and compressed by using pressure rolls, and heated.

A problem that may be observed first during prepreg production using a pressure impregnation method is that the matrix resin composition bulges out beyond the width of the reinforcing fiber sheet as a result of compressing the composition using pressure rolls. When the matrix resin composition has bulged out and an excessive amount adheres to both side edges of the prepreg, such a situation may lower the ease of handling of the prepreg while decreasing the strength of the resultant fiber-reinforced composite material.

A problem that may be observed second during the production of prepreg using a pressure impregnation method is that compression by using pressure rolls causes a reduction in the basis weight (weight per unit area) of reinforcing fiber on both side edges of a prepreg. Such a situation occurs when a reinforcing fiber sheet is compressed by pressure rolls and is spread out in a width direction, causing reinforcing fiber bundles to be moved sideways significantly at both edges of the reinforcing fiber sheet.

To solve the above first problem, JP H06 170847 A1 proposes a method for arranging a tape material having affinity with the matrix resin composition to be in touch with both side edges of a reinforcing fiber sheet. According to such a method, since the bulging matrix resin composition is removed along with the tape material that has affinity with the composition, the resultant prepreg will not include bulging portions of the composition.

However, the method described in JP H06 170847 A cannot prevent the matrix resin composition from bulging out. Thus, the bulging resin composition may still affect the stable production process of the prepreg.

In addition, using the production method described in JP H06 170847 A, if the tape material arranged to be in touch with both side edges of the reinforcing fiber sheet is thinner than the prepreg, the prepreg flows out from between pressure rolls and the tape material, and the above second problem will occur. In addition, if the tape material is thicker than the prepreg, since the prepreg is not well compressed, the matrix resin composition will not be sufficiently impregnated into reinforcing fiber bundles. Furthermore, using a tape having affinity with the matrix resin composition as described in JP H06 170847 A, an extra amount of the matrix resin composition needs to be used. Yet furthermore, once a matrix resin composition is adsorbed on the sheet, the sheet cannot be recycled, thus increasing the production cost.

Also, in the method of JP H06 200051 A, protruding portions are arranged on the outer side of a release sheet so that the release sheet is bent to prevent the matrix resin composition from flowing out over the release sheet. Such a method is capable of preventing a matrix resin composition from flowing out over the release sheet. However, the method is incapable of suppressing a matrix resin composition from flowing out of the prepreg, and is not so effective in solving the above first problem, either.

Further, JP H04 189110 A discloses a sheetlike molding material and a both ends treatment device of sheetlike molding material. At the time of operation of heat sealing, a cylinder rod is held under an extended state and an outer circumferential end face of a torus roll of heating rolls of a heat seal roll are pressure-contacted with one side of a sheetlike molding material, that is, a carrier film, in a heat sealing device. A pressure contacting position is about 10cm from both ends of a widthwise direction of a sheetlike molding material and pressure-contacted at a width of about 5mm. Since tensile force is applied to the sheetlike molding material, the upper and lower films which are in a laminated state by only pressure contacting on one surface are welded each other by the pressure contacting by an end face of an outer circumference of the toruslike roll. With this construction, the heat sealing part is formed and the upper and lower films are separated from each other as they are up to both end fringes from the heat sealing part.

JP H03 76613 A discloses a continuously pressurizing device wherein transferring belts (endless steel belt) are laid on the two pairs of drums in stretched condition, and the upper and lower belts are rotationally driven in the same speed. The object to be compressed is nipped between the transferring belts and is transferred. At least a pair of spacers are provided capably of being transferred in the same direction as the transferring direction of the transferring belts at the position corresponding to the peripheral edge of an aperture at both sides in width direction of the object to be compressed between the transferring belts. Accordingly, the whole surface of the object to be compressed is subjected to uniform pressure from a fixed pressurizing chambers. Consequently, the uniform product without unevenness may be produced with high yield.

EP 2 931 488 A2 discloses a method, a plant and a resin mat for the production of fiber-reinforced molded parts, in particular by means of extrusion in a molding press. It is based on a fiber-reinforced resin mat continuously produced in a flat belt system, wherein in the flat belt system at least one resin attachment layer in an application region for resin attachment to a lower and / or upper support medium and combined with fibers, mixed in a subsequent step and impregnation and finally a preferably endless resin mat is completed. However, EP 2931488 A2 does not disclose a method making use of an elastic member that has an elongation at break of 100% or greater and a Young's modulus of 0.01-40 MPa.

### SUMMARY OF THE INVENTION

### PROBLEMS TO BE SOLVED BY THE INVENTION

The present invention was carried out to solve the aforementioned problems. Namely, an aspect of the present invention is a method for producing a prepreg as follows: when a reinforcing fiber sheet and a matrix resin composition are compressed to impregnate the resin into the fiber sheet, the matrix resin composition is prevented from bulging out and the reinforcing fiber sheet from spreading out in a width direction. Accordingly, the matrix resin composition is prevented from adhering excessively to both side edges of the prepreg, the ease of handling the prepreg will not diminish, and the strength of fiber-reinforced composite material will not decrease. In addition, since the reinforcing fiber sheet is prevented from spreading out to result in a greater width, the basis weight of the reinforcing fiber will not decrease on both side edges of prepreg.

### SOLUTIONS TO THE PROBLEMS

A method according to the present invention is defined by the combination of features of claim 1. Dependent claims relate to preferred embodiments.

The elastic members may be set to be continuous in a longitudinal direction of the prepreg precursor, or may be set to be annular.

The tension of the elastic members may be controlled.

The elastic members may be made of a foamed material.

Lubrication treatment may be conducted on the elastic members.

The second release sheet may be made of a thermoplastic resin film.

The reinforcing fiber sheet may be made up of a first reinforcing fiber sheet and a second reinforcing fiber sheet, and the method for producing a prepreg may further include a step for forming the prepreg precursor by coating a matrix resin composition on one surface of the first reinforcing fiber sheet, and by laminating the second reinforcing fiber sheet on the one surface of the first reinforcing fiber sheet.

### EFFECTS OF THE INVENTION

According to the above embodiments of the present invention, a prepreg is obtained where the resin composition does not bulge out from both side edges of the prepreg, and the basis weight of the reinforcing fiber is not reduced on both side edges of the reinforcing fiber sheet.

### BRIEF DESCRIPTION OF THE DRAWINGS

FIG. 1 is a view showing a method for producing a prepreg according to a first embodiment of the present invention;
FIG. 2 is a cross-sectional view along line I-I in FIG. 1 to illustrate an essential part of the method for producing a prepreg according to the first embodiment of the present invention;
FIG. 3 is a view showing a method for producing a prepreg according to a second embodiment of the present invention;
FIG. 4 is a cross-sectional view along line J-J in FIG. 3 to illustrate an essential part of the method for producing a prepreg according to the second embodiment of the present invention;
FIG. 5 is a view showing the widths of SMCs respectively obtained in Example 2 and Comparative Example 2;
FIG. 6A is a graph showing the basis weight distribution of the SMC obtained in Example 2 when the coating width of a matrix resin composition is set at 620 mm; and
FIG. 6B is a graph showing the basis weight distribution of the SMC obtained in Comparative Example 2 when the coating width of a matrix resin composition is set at 620 mm.

### DETAILED DESCRIPTION OF THE EMBODIMENTS

Embodiments of the present invention are described below in detail with reference to the accompanying drawings.

### (First Embodiment)

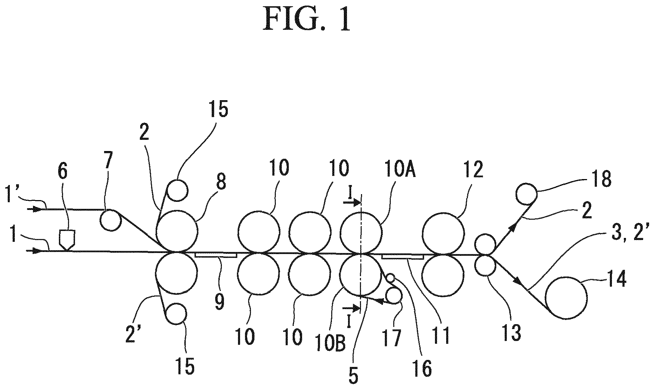

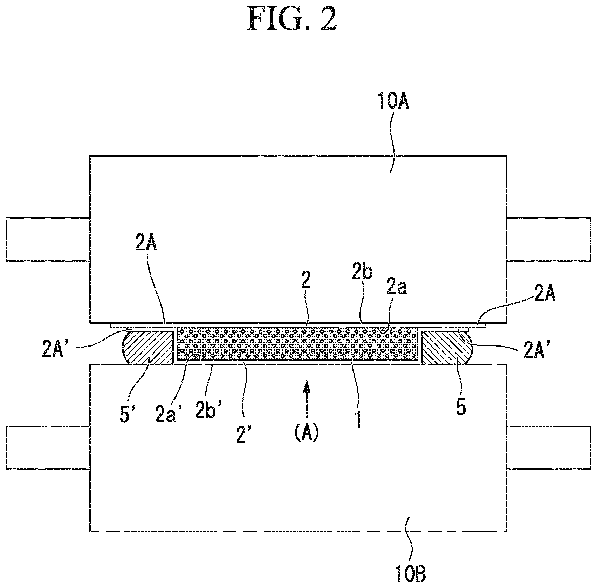

FIGs. 1 and 2 show a method for producing a prepreg according to a first embodiment of the present invention.

In FIG. 1, reinforcing fiber sheet 1 is formed by aligning multiple reinforcing fiber bundles in one direction. To align multiple reinforcing fiber bundles in one direction, for example, an appropriate number of bobbins with reinforcing fiber bundles wound around each bobbin is prepared, and the reinforcing fiber bundles are pulled out from each bobbin while aligning them parallel to each other so as to form a sheet.

In FIG. 1, a matrix resin composition discharged from die coater **6** is coated onto one surface of first reinforcing fiber sheet **1** moving in the direction of travel. Next, second reinforcing fiber sheet **1'** supplied via guide roll **7** is laminated on the matrix resin composition coated on first reinforcing fiber sheet **1** so that prepreg precursor (A) is formed. Namely, prepreg precursor (A) is formed with a matrix resin composition along with first and second reinforcing fiber sheets **1, 1'** sandwiching the matrix resin composition.

Prepreg precursor (A) is sandwiched between first release sheet **2** and second release sheet **2',** which are pulled out through feed rolls **15** when second reinforcing fiber sheet **1'** is laminated on the matrix resin composition. First and second release sheets **2, 2'** each have a first surface that makes contact with prepreg precursor (A) and a second surface opposite the first surface. Namely, first and second release sheets **2, 2'** are laminated on prepreg precursor (A) so that first surface **2a** of first release sheet **2** and first surface **2a'** of second release sheet **2'** are set to face prepreg precursor (A). Here, the size of first and second release sheets **2, 2'** in a width direction (direction perpendicular to the direction of travel) is set greater than the size of prepreg precursor (A) in a width direction, as shown in FIG. 2. In addition, first and second release sheets **2, 2'** have extended portions **2A, 2A'** that respectively protrude outward from both edges of prepreg precursor (A) in a width direction when they are laminated on prepreg precursor (A).

Moreover, prepreg precursor (A) sandwiched between first and second release sheets **2, 2'** travels through a pair of nip guide rolls **8.** Paired nip guide rolls **8** are positioned to have a predetermined space between them. Laminated first and second release sheets **2, 2'** and prepreg precursor (A) are compressed while they pass through the space.

Next, prepreg precursor (A) is heated by using hot plate **9** at a heating temperature of approximately 80-120°C.

Then, prepreg precursor (A) sandwiched between first and second release sheets **2, 2'** is compressed in a thickness direction by a pair of pressure rolls **10.** Multiple pairs of pressure rolls **10** are arranged in the direction of travel. When prepreg precursor (A) is compressed by multiple pairs of pressure rolls **10,** the matrix resin composition in prepreg precursor (A) is gradually impregnated into reinforcing fiber sheets **1, 1'.**

Next, prepreg precursor (A) is compressed when it passes between pressure rolls **10A, 10B** positioned on the downstream side (rear side) in the direction of travel. Compression process by pressure rolls **10A, 10B** is described with reference to FIG. 2, which is a cross-sectional view along line I-I of FIG. 1.

A pair of elastic members **5** set to be continuous in a longitudinal direction of prepreg precursor (A) is provided on pressure roll **10B,** one of paired pressure rolls **10A, 10B.** On portions of second release sheet **2',** which are on the outer sides of where prepreg precursor (A) is arranged (positions facing extended portions **2A, 2A'**), elastic members **5** are respectively arranged parallel to each other. Pressure rolls **10A, 10B** compress elastic members **5,** prepreg precursor (A) and release sheets **2, 2'** all at once in a thickness direction of prepreg precursor (A).

As shown in FIG. 2, during the compression process by pressure rolls **10A, 10B,** the matrix resin composition in prepreg precursor (A) is compressed, while elastic members **5** make contact with second surface **2b'** of second release sheet **2'** to bring extended portions **2A, 2A'** of first and second release sheets **2, 2'** to abut each other. Accordingly, both edges in a width direction of prepreg precursor (A) are encapsulated, and reinforcing fibers of prepreg precursor (A) are prevented from spreading sideways when flowing out with the matrix resin composition. In addition, a reduction in the basis weight of reinforcing fiber is suppressed from occurring along both edges of the prepreg.

Elastic members **5** are provided in a loop to circulate from pressure roll **10B** to elastic-member guide roll **17** as shown in FIG. 1. In addition, elastic-member tensioning roll **16** is in contact with elastic members **5** from the outer side of the loop. The tension of elastic members **5** is adjustable by modifying the amount of force when elastic-member tensioning roll **16** is pressed against elastic members **5.**

Prepreg **3,** which is a compressed prepreg precursor (A), is cooled by cooling plate **11.** Moreover, when going through haul-off rolls **12** and release guide rolls **13,** first release sheet **2** laminated on the upper side is removed from prepreg **3,** and prepreg **3** along with second release sheet **2'** is wound by winding device **14.** First release sheet **2** is recovered by release-sheet winding device **18.**

As shown in FIG. 1, when a matrix resin composition is supplied to reinforcing fiber sheets **1**, **1'**, the matrix resin composition is directly coated on reinforcing fiber sheet **1** by using die coater **6.** However, the present invention is not limited to the method shown in FIG. 1, and any other method may be employed. For example, a matrix resin composition may be supplied onto reinforcing fiber sheet **1** by using touch rolls, or by a dipping method, a dispensing method, or the like. Also, as shown in FIG. 1, second reinforcing fiber sheet **1'** is laminated on a surface of first reinforcing fiber sheet **1** coated with a matrix resin composition, and then two release sheets sandwich prepreg precursor (A) formed with a matrix resin composition positioned between reinforcing fiber sheets. However, the present embodiment is not limited to such a structure. For example, it is an option not to use a second reinforcing fiber sheet but to coat a matrix resin composition on one surface of a reinforcing fiber sheet, and then to sandwich the coated sheet between two release sheets. Also, it is another option to coat a matrix resin composition on both surfaces of a reinforcing fiber sheet and to sandwich the double-coated reinforcing fiber sheet **1** between two release sheets without including a second reinforcing fiber sheet. Moreover, multiple reinforcing fiber sheets and multiple coated films of a matrix resin composition may be laminated alternately. Yet another option is to coat a matrix resin composition on the first surfaces of first and second release sheets **2, 2'** using a doctor blade or a die coater, and then to sandwich first reinforcing fiber sheet **1** by the matrix resin composition coated on release sheets **2, 2'** without using a second reinforcing fiber sheet.

Various inorganic or organic fibers may be used as reinforcing fiber in reinforcing fiber sheet **1.** For example, carbon fibers, graphite fibers, aramid fibers, nylon fibers, high-strength polyester fibers, glass fibers, boron fibers, alumina fibers, silicon nitride fibers and the like may be used. Among them, carbon fibers and graphite fibers are preferred to be used as reinforcing fiber since they have properties such as flame retardancy, high specific strength and high specific elastic moduli. Depending on usage purposes, various carbon fibers or graphite fibers may be used. Especially preferred are carbon fibers with a tensile elongation of 1.5% or higher, more preferably carbon fibers with a tensile strength of 4.5 GPa or greater and a tensile elongation of 1.7% or higher, even more preferably carbon fibers with a tensile elongation of 1.9% or higher.

The basis weight of fiber in a reinforcing fiber sheet is adjusted according to the requirement of fiber-reinforced composite material. For example, when the total basis weight of reinforcing fiber sheet sandwiched by first and second release sheets **2, 2'** is 150 g/m², more preferably 300 g/m², the present invention is especially effective.

Since a matrix resin composition needs to be impregnated into reinforcing fiber sheet **1,** it is preferred to use a liquid resin having a low viscosity that does not cause problems in handling. Examples of a matrix resin composition are thermosetting resins such as epoxy resins, vinyl ester resins, unsaturated polyester resins, phenolic resins, and maleimide resins.

When carbon fibers are used as reinforcing fiber, epoxy or vinyl ester resins are preferred since they exhibit excellent adhesiveness with carbon fibers.

Specific examples of epoxy resins are glycidyl ether epoxy resins, glycidyl amine epoxy resins, glycidyl ester epoxy resins, alicyclic epoxy resins and the like. If necessary, a curing agent, a curing aid, or other additives are mixed in to prepare a matrix resin composition.

The amount of matrix resin composition adhered to the fiber sheet is adjusted according to the requirements of a fiber-reinforced composite material; for example, the resin amount may be 20∼50 mass% of the weight of a prepreg.

Specific examples of first and second release sheets **2, 2'** are release papers or release films formed by coating a release agent such as a silicone resin on wood-based paper or film made of soft or hard crosslinked polymers.

Examples of wood-based papers are kraft paper, glassine paper or the like. Examples of soft crosslinked polymers that exhibit heat resistance higher than a processing temperature are polyethylene, polystyrene, polypropylene, polyvinyl chloride, polyvinylidene chloride, polylactic acid, polyamide or the like. Examples of hard crosslinked polymers are polyethylene terephthalate and the like.

As for the material of second release sheet **2'** that makes contact with elastic members **5,** if it is a wood-based paper or a film of a soft crosslinked polymer, the thickness is preferred to be 110 µm or less, preferably 80 µm or less, since such a thickness allows release sheet **2'** to deform along elastic members **5.** If it is a film made of a hard crosslinked polymer, the thickness is preferred to be 75 µm or less, more preferably 25 µm or less. If it is a film made of a soft crosslinked polymer, its thickness is preferred to be 50 µm or greater, and if it is a film made of a hard crosslinked polymer, its thickness is preferred to be 15 µm or greater. Release papers and films satisfying the above thickness conditions are preferred, since they exhibit enough strength that does not cause breakage during the production process.

To form prepreg precursor (A) sandwiched between first and second release sheets **2, 2',** another method is to coat a matrix resin composition on first surfaces of first and second release sheets **2, 2',** and to sandwich reinforcing fiber sheet **1** between first and second release sheets **2, 2'** so that their respective first surfaces make contact with reinforcing fiber sheet **1.** Yet another method for sandwiching reinforcing fiber sheet **1** by release sheets is to coat a matrix resin composition on a first surface of a release sheet, to laminate the coated release sheet on reinforcing fiber sheet **1** so that the first surface makes contact with one surface of reinforcing fiber sheet **1,** and to laminate another release sheet, not coated with a matrix resin composition, on the other surface of reinforcing fiber sheet **1.**

To compress prepreg precursor (A), any known method using pressure rolls **10** may be employed. At that time, using a device having a mechanism to adjust temperatures, prepreg precursor (A) is compressed under desired temperature conditions. As a result, conditions for impregnating a matrix resin composition into reinforcing fiber sheet **1** is more accurately controlled. Any known device may be used for such compression process. For example, they may be pressure rolls having an inner structure capable of holding a thermal medium such as hot water, pressure rolls having an induction heater on its surface, or the like. It is preferred to use pressure rolls capable of exerting strong compression for a prepreg precursor (A) that includes a sheet made of multiple unidirectional reinforcing fiber bundles. However, that is not the only option. Various compression methods suitable for the structure of a prepreg may be employed as long as elastic members are provided therein.

In addition, if pressure rolls with a small diameter are used, a reverse flow of a matrix resin may occur due to a sudden rise in pressure. Therefore, the diameter of pressure rolls for exerting high pressure is preferred to be at least 300 mm, more preferably 400 mm or greater, even more preferably 500 mm or greater.

The force of pressure rolls may be set differently depending on the width and weight of prepreg **3,** the percentage of a matrix resin to be contained, the viscosity of a matrix resin composition, and the elastic modulus, thickness and width of elastic member **5.** Therefore, the pressing force is determined through arithmetic calculations and experiments based on such parameters as listed above. In the present embodiment, it is preferred to set a predetermined clearance between paired pressure rolls facing each other, and to compress the pressure rolls by exerting a sufficient load onto a clearance setting mechanism (not shown). The clearance of pressure rolls is gradually reduced from upstream pressure rolls toward downstream pressure rolls by setting the lower limit at the value obtained by adding the thickness reflecting the fiber weight/fiber density of a prepreg, the thickness reflecting the resin weight/resin density of the prepreg, and the thicknesses of first and second release sheets.

In the present embodiment, elastic members **5** cause extended portions **2A, 2A'** of first and second release sheets **2, 2'** to abut each other as described above so that prepreg precursor (A) is encapsulated in its width direction. Accordingly, reinforcing fiber of prepreg precursor (A) is prevented from spreading in a width direction when flowing out with the matrix resin composition. As a result, the basis weight of reinforcing fiber is suppressed from decreasing toward both edges of the prepreg in a width direction.

When prepreg precursor (A) is nipped by pressure rolls **10A, 10B,** due to the pressure caused by pressure rolls **10A, 10B,** the matrix resin composition flows backward relative to the direction of travel of reinforcing fiber sheet **1** (toward the upstream side, in a reverse direction from the entry side of pressure rolls **10A, 10B**). In such a case, to achieve the aforementioned effects of the present embodiment, both edges of prepreg precursor (A) in a width direction need to be encapsulated within a range of a resin reservoir formed by the flow of the matrix resin composition described above. Thus, elastic members **5** need to have a thickness that is 1∼10 times greater than the final thickness of a prepreg sheet prior to the compression process, and also to have a thickness equal to the thickness of the prepreg sheet when being compressed. Furthermore, elastic members **5** need to have resistance to deformation against the pressure coming from the matrix resin so that first and second release sheets **2, 2'** stay in contact with each other.

Therefore, as the material for elastic members **5,** it is preferred to use material having an elongation at break of 100% or greater and a Young's modulus of 0.01∼40 MPa, more preferably, a material having an elongation at break of 200% or greater and a Young's modulus of 0.1∼5 MPa. Examples of the material for elastic members **5** are elastomers and foamed elastomers. Examples of elastomers are natural rubbers, synthetic rubbers such as butadiene rubbers, nitrile rubbers and acrylic rubbers, urethane rubbers, olefin-based elastomers such as EPM and EPDM, silicone rubbers and the like. Foamed elastomers are preferred, since their allowable compressibility is higher. Either closed-cell foams or open-cell foams are preferred to be used. Moreover, since heat resistance is excellent and permanent compression distortion at high temperature is minimal when silicone-foam rubbers are used, they are preferred because the elastic members can be used repeatedly.

The cross-sectional shape of an elastic member perpendicular to the direction of travel is not limited specifically as long as it is in a shape capable of preventing reinforcing fiber from spreading sideways when flowing out along with the resin composition. Circles, ellipses, squares, rectangles or the like may be employed.

In addition, when elastic members **5** are nipped and compressed between pressure roll **10B** and second release sheet **2',** elastic members **5** elongate toward the upstream side. Thus, elastic members **5** are preferred to slide smoothly between second release sheet **2'** and pressure roll **10B.** For that matter, it is preferred to employ any of the following treatments in advance: to conduct lubrication or low-friction treatment by coating silicone oil or fluorine resin on second surface **2b'** of second release sheet **2'** and on the surface of pressure roll **10B**; to coat silicone oil or fluorine resin on elastic members 5; to provide a solid lubricant such as talc on elastic members **5;** or to provide a generally used lubricating oil on elastic members **5,** second release sheet **2'** and pressure roll **10B.**

A predetermined space provided between elastic member **5** and an edge of prepreg precursor (A) may vary depending on the width of prepreg **3,** the width and basis weight of reinforcing fiber sheet **1,** the basis weight of a matrix resin composition, the thickness of compression space, compression force, the elastic modulus of elastic member **5,** and the shape of elastic member **5.** Thus, the size of a space between elastic member **5** and the edges of prepreg precursor (A) may be determined through arithmetic calculations and experiments based on such parameters listed above.

The method for providing elastic members **5** is not limited specifically. As shown in FIG. 1, annular elastic members **5** circulate only around pressure roll **10B,** which is located on the most downstream side among pressure rolls. However, annular elastic members **5** may be provided to circulate around pressure roll **10A** and be brought into contact with second surface **2b** of first release sheet **2** so that first and second release sheets **2, 2'** are set to abut each other. Alternatively, annular elastic members **5** may be set to circulate separately around each of pressure rolls **10A**, **10B** so that first and second release sheets **2, 2'** are set to abut each other from both surfaces of prepreg precursor (A). Yet alternatively, annular elastic members **5** may be set to circulate separately around each of multiple pressure rolls **10,** or a pair of elastic members **5** may be set to circulate around all the pressure rolls. Yet another option is to use long-type elastic members **5** and to set a supply device and a haul-off device respectively on both the upstream and downstream sides of the pressure rolls where encapsulation is necessary.

In addition, as shown in FIG. 1, elastic members **5** are set in a loop to circulate around pressure roll **10B** and elastic-member guide roll **17.** However, that is not the only option; for example, elastic members **5** may be set to circulate only on the periphery of pressure roll **10B**, or multiple guide rolls **17** are provided so that elastic members **5** are set to circulate around them.

In the example shown in FIG. 1, to impregnate a matrix resin composition gradually into reinforcing fiber sheets **1, 1',** multiple pressure rolls **10** are used. However, as long as they include a pressure roll having elastic members **5,** the number of pressure rolls is not limited specifically.

In the example shown in FIG. **1****,** prepreg precursor (A) is compressed when it passes between paired pressure rolls. However, that is not the only option. For example, prepreg precursor (A) may also be compressed when it passes between a pressure roll and a plate or the like.

### (Second Embodiment)

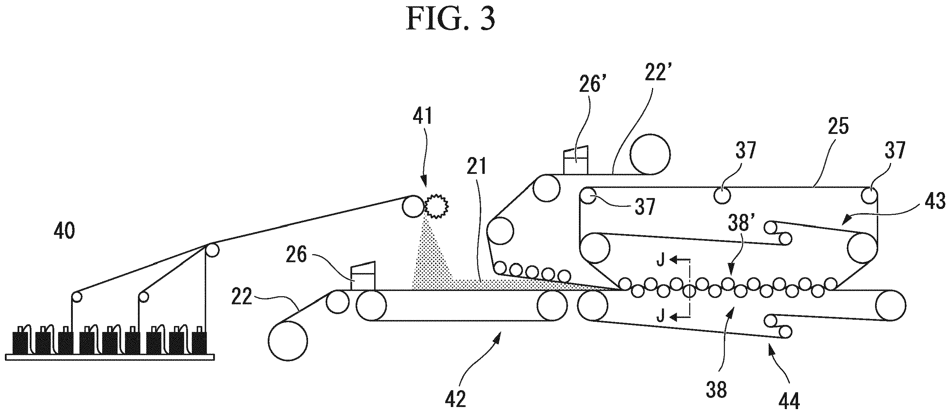

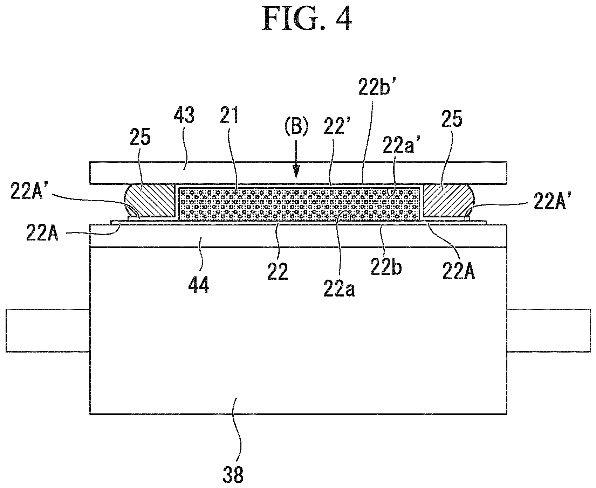

A method for producing a prepreg according to a second embodiment of the present invention is described with reference to FIGs. 3 and 4.

The present embodiment describes a method for producing a prepreg as a sheet molding compound (SMC) by using reinforcing fiber sheet **21,** which is made of short reinforcing fiber bundles deposited two-dimensionally at random.

As shown in FIG. 3, a matrix resin composition is coated by coating device **26** on first release sheet **22** using a doctor blade method. Next, reinforcing fiber bundles supplied from bobbins **40** and cut by cutter **41** into a predetermined length of 10∼50 mm are deposited by being homogenously dispersed on a matrix resin composition. Accordingly, reinforcing fiber sheet **21** is formed on a matrix resin composition coated on first release sheet **22.** In addition, a matrix resin composition is coated by coating device **26'** on second release sheet **22'** by using a doctor blade method. Then, the surface coated with a matrix resin composition (first surface **22a'**) of second release sheet **22'** is laminated on reinforcing fiber sheet **21** so as to be in contact with the surface coated with the matrix resin composition (first surface **22a**) of first release sheet **22.** Accordingly, reinforcing fiber sheet **21** is sandwiched by the matrix resin composition coated on first and second release sheets **22, 22',** the matrix resin composition is impregnated into reinforcing fiber sheet **21,** and prepreg precursor (B) is formed with the matrix resin composition and reinforcing fiber sheet **21.** Namely, prepreg precursor (B) contains reinforcing fiber sheet **21** and the matrix resin composition that sandwiches reinforcing fiber sheet **21.** In addition, first release sheet **22** and second release sheet **22'** each have a first surface that is in contact with prepreg precursor (B) and a second surface opposite the surface in contact with prepreg precursor (B).

In the present embodiment, the same as in the first embodiment, the measurement of first and second release sheets **22, 22'** in a width direction (direction perpendicular to the direction of travel) is set greater than that of prepreg precursor (B) in a width direction. As shown in FIG. 4, first and second release sheets **22, 22'** are laminated so as to include extended portions **22A, 22A'** that protrude outward from prepreg precursor (B) toward both edges in a width direction respectively.

Next, prepreg precursor (B) is passed between second mesh belt conveyor **43** and third mesh belt conveyer **44** positioned to keep a predetermined space and be parallel to each other in a longitudinal direction. Moreover, compaction roll **38'** is appropriately lowered into the space between second and third mesh belt conveyors **43, 44** so that prepreg precursor (B) is compressed and the matrix resin composition is impregnated into reinforcing fiber sheet **21.**

Compared with the compression exerted by pressure rolls **10, 10A, 10B** in the first embodiment, compression exerted by mesh belt conveyors **43, 44** is sufficiently small. The viscosity of the matrix resin composition contained in SMC prepreg precursor (B) is significantly lower than the viscosity of the matrix resin composition contained in prepreg precursor (A) formed with unidirectional multiple reinforcing fiber bundles. Thus, if prepreg precursor (B) is compressed by employing a method for nipping the precursor between paired pressure rolls, the compression is too strong, and an excessive flow of resin is caused to the point that it may be difficult to maintain the sheet shape. To exert compression with sufficiently low force on prepreg precursor (B) containing reinforcing fiber bundles cut into a predetermined length, it is preferred to exert pressure using vertically positioned mesh belt conveyors along with alternately positioned compaction rolls **38', 38** arranged vertically. In such a pressure device, compression is generated by the tension and curvature radius of mesh belts passing separately away from compaction rolls **38', 38.** However, that is not the only option in the present embodiment, and various compression methods may also be employed according to the structure of a prepreg as long as elastic members are provided therein.

In FIG. 3, on second mesh belt conveyor **43,** a pair of elastic members **25** is provided continuously in a longitudinal direction of prepreg precursor (B). The compression exerted by second and third mesh belt conveyors **43, 44** is described with reference to FIG. 4, which is a cross-sectional view at line J-J in FIG. 3.

As shown in FIG. 4, elastic members **25** are set to be parallel to each other and respectively located on the outer sides of prepreg precursor (B) arranged on second release sheet **22'** (positions facing extended portions **22A, 22A'**). Second and third mesh belt conveyors **43, 44** compress elastic members **25,** prepreg precursor (B), and first and second release sheets **22, 22'** all at once in a thickness direction of prepreg precursor (B). As shown in FIG. 4, the matrix resin composition in prepreg precursor (B) is compressed accordingly, and elastic members **25** are brought into contact with second surface **22b'** of second release sheet **22'** so that extended portions **22A, 22A'** of first and second release sheets **22, 22'** will abut each other. Accordingly, both edges of prepreg precursor (B) in a width direction are encapsulated, and reinforcing fiber of prepreg precursor (B) is prevented from spreading sideways when flowing out along with the matrix resin composition. Moreover, the basis weight of reinforcing fiber in the prepreg is suppressed from decreasing toward both edges in a width direction.

In FIG. 3, elastic members **25** are set in a loop to circulate around second mesh belt conveyor **43** and elastic member guide rolls **37.**

Prepreg precursor (B) after passing through second and third mesh belt conveyors **43**, **44** is recovered by a recovery device (not shown). Then, prepreg precursor (B) is set aside at a predetermined temperature for a certain duration to increase the viscosity of the matrix resin composition. Accordingly, prepreg (SMC) is obtained.

Since a matrix resin composition needs to be impregnated into reinforcing fiber bundles of reinforcing fiber sheet **21,** it is preferred to use a liquid resin with a low viscosity within a range that does not lower the ease of handling the matrix resin composition. Examples of a material for forming a matrix resin composition are thermosetting resins such as vinyl ester resins, unsaturated polyester resins, epoxy resins, phenolic resins and maleimide resins.

When carbon fibers are used for reinforcing fiber, it is preferred to use vinyl ester resins or epoxy resins since they exhibit excellent adhesiveness with carbon fibers.

A matrix resin composition is prepared by mixing a curing agent, a curing aid, or other additives to the above resin if necessary.

The amount of a matrix resin composition adhered to the fiber sheet is adjusted depending on the requirement of a fiber-reinforced composite material. For example, it is set at 30∼70 mass% of the prepreg mass.

As for the material for elastic members **25,** it is preferred to use material having an elongation at break of 100% or greater and a Young's modulus of 0.01∼40 MPa, or it is especially preferred to use a material having an elongation at break of 200% or greater and a Young's modulus of 0.1∼5 MPa. Examples of the material for elastic members **25** are elastomers and foamed elastomers. Examples of elastomers are natural rubbers, synthetic rubbers such as butadiene rubbers, nitrile rubbers and acrylic rubbers, urethane rubbers, olefin-based elastomers such as EPM and EPDM, silicone rubbers and the like. Foamed elastomers and tubes may be used for elastic members **25.** Foamed elastomers are preferred, since allowable compressibility is higher. Either closed-cell foams or open-cell foams are preferred to be used.

The cross-sectional shape of an elastic member perpendicular to the direction of travel is not limited specifically as long as it is in a shape capable of preventing reinforcing fiber from spreading sideways when flowing out with the resin composition. Circles, ellipses, squares, rectangles or the like may be employed. They may be solid or hollow. When an elastic member having a hollow cross section is used, the elastic member is preferred to have an apparent compression modulus of 0.01∼40 MPa, more preferably 0.1∼5 MPa, relative to the maximum width of a cross section when no load is exerted thereon. Regarding a minimum compressibility rate that causes permanent distortion, the elastic member is preferred to have a compressibility rate of 30% or greater relative to the maximum height of a cross section when no load is exerted thereon. The apparent compression modulus of an elastic member having a hollow cross section may be set in a preferred range by adjusting the pressure of fluid such as compressed air encapsulated in the hollow portion of the elastic member.

In addition, when elastic members **25** are nipped and compressed between second mesh belt conveyor **43** and second release sheet **22',** elastic members **25** elongate toward the upstream side. Thus, elastic members **25** are preferred to slide smoothly between second release sheet **22'** and second mesh belt conveyor **43.** For that matter, the same treatments listed in the first embodiment may also be employed.

As for reinforcing sheet **21** and first and second release sheets **22, 22',** the same materials listed for reinforcing fiber sheet 1 and first and second release sheets **2, 2'** used in the first embodiment may also be used.

In FIG. 3, a matrix resin composition is coated on first and second release sheets **22, 22'** by using a doctor blade method, and reinforcing fiber sheet **21** is sandwiched between the coated release sheets. However, the present invention is not limited to the coating method shown in FIG. 3. For example, a matrix resin composition may be coated on first and second release sheets **22**, **22'** by using a die coater. In addition, a prepreg precursor may be formed by sandwiching a matrix resin composition between reinforcing fiber sheets **21** the same as in the first embodiment. In such a case, for example, reinforcing fiber bundles cut into a predetermined length are deposited by being dispersed on a release sheet, a matrix resin composition is laminated on the deposited cut fiber, reinforcing fiber bundles are cut into short pieces and dispersed to be further deposited, and finally, another release sheet is laminated thereon.

In FIG. 3, elastic members **25** are provided on second mesh belt conveyor **43.** However, the present embodiment is not limited to such a structure. For example, it is an option to set annular elastic members **25** on third mesh belt conveyor **44,** and to bring the elastic member into contact with second surface **22b** of first release sheet **22** so that release sheets **22, 22'** will abut each other. In addition, annular elastic members **25** are set to circulate separately around each of both second and third mesh belt conveyors **43, 44** so that release sheets **22, 22'** will abut each other from both surfaces of prepreg precursor (B) respectively.

Also, in FIG. 3, elastic members **25** are set in a loop to circulate around second mesh belt conveyor **43** and elastic-member guide rolls **37.** However, that is not the only option. Elastic members **25** may be set to circulate only on the periphery of second mesh belt conveyor **43.** In addition, an elastic-member tensioning mechanism may be provided for adjusting the tension of elastic members **25.** Elastic members **25** may also be set as a long type, and a supply device and a haul-off device of elastic members **25** are arranged on both the upstream and downstream sides of second and third mesh belt conveyors **43, 44.**

### EXAMPLES

### [First Example]

An example of the first embodiment is described below.

### <Raw Materials>

Materials used in the present example are listed in the following.
Carbon fiber bundles: brand name "TRH50-60M" made by Mitsubishi Rayon Co., Ltd. (number of filaments: 60000, tensile strength: 4.9 GPa, tensile elongation: 2.0%, tensile elasticity: 250 GPa, basis weight: 3.2 g/m²)
Epoxy resin A: bisphenol A epoxy resin, "jER® 828" made by Mitsubishi Chemical Corporation
Epoxy resin B: oxazolidone ring-containing epoxy resin, brand name: "AER® 4152" made by Asahi Kasei E-Materials Corporation
Curing agent: dicyandiamide, brand name "DICY 15" made by Mitsubishi Chemical
Curing aid: 3-(3,4-dichlorophenyl)-1,1-dimethylurea, brand name "DCMU 99" made by Hodogaya Chemical Co., Ltd.

### <Preparation of Matrix Resin>

First, 8.3 parts by mass of epoxy resin A, 1 part by mass of the curing agent, and 4.1 parts by mass of the curing aid were measured, stirred and mixed. The mixture was further finely mixed by using a three-roll mill to prepare a curing agent masterbatch. Separately, 75.7 parts by mass of epoxy resin A and 16 parts by mass of epoxy resin B were placed in a glass flask and heated to 130°C by using an oil bath. Then, the mixture of epoxy resins A and B was cooled to approximately 60°C. To the cooled mixture 13.4 parts by mass of the curing agent masterbatch was added, stirred and mixed. Accordingly, a matrix resin composition was obtained. When the viscosity of the matrix resin composition is measured at 30°C under the following conditions, it was 50 Pa·s.

### <Conditions for Measuring Viscosity>

Device: viscoelasticity measuring device (brand name "VAR-100" made by Reologica Instruments AB)
Plate: 40ϕ parallel plates
Gap betw. plates: 0.5 mm
Measuring frequency: 1.59 Hz
Heating rate: 2°C/min.
Stress: 300 Pa

### (Example 1)

A silicone sponge rubber having a porosity of 50% and an Asker C hardness of 35 degrees was processed to have a natural thickness of 2 mm and natural width of 20 mm. Then, two elastic members **5** were obtained, each having a circumferential length of 1800 mm under no tension. Surface lubrication treatment was conducted on the elastic members by coating silicone oil (brand name "Silicone Lube Spray" made by Kure Engineering, Ltd.)

Using a production apparatus shown in FIGs. 1 and 2, reinforcing fiber bundles were pulled from the creels at a line speed of 5 m/min. and aligned to make reinforcing fiber sheets **1, 1',** which were homogenously formed to have a width of 150 mm and a basis weight of 400 g/m². The above matrix resin composition was homogenously coated on one surface of reinforcing fiber sheet **1** to have a basis weight of 392 g/m². Next, reinforcing fiber sheet **1'** was laminated on the surface coated with the matrix resin composition. Then, first surfaces of 25 µm-thick first and second release sheets **2, 2'** (polyethylene terephthalate film, brand name "MRF-25" made by Mitsubishi Plastics, Inc.) were respectively laminated on both outer surfaces of reinforcing fiber sheets **1, 1'** where the matrix resin composition was sandwiched in between (prepreg precursor (A) in the present example). The laminated sheets were passed through nip guide rolls **8** with a clearance of 0.8 mm, and prepreg precursor (A) was sandwiched between first and second release sheets **2, 2'.** After that, prepreg precursor (A) was heated by using hot plate **9.** Then, prepreg precursor (A) was passed through two sets of pressure rolls **10,** each having a diameter of 500 mm, heated to 130°C, and set to have a clearance between rolls at 0.680 mm for the first paired rolls, and at 0.625 mm for the second paired rolls. Accordingly, prepreg precursor (A) was compressed while it was sandwiched between first and second release sheets **2, 2'.** At that time, elastic members **5** were continuously provided to pressure roll **10B** of the second pair from the second-surface side of second release sheet **2',** while the inner edge of each elastic member **5** was aligned at a position 5 mm outward from the target width of 179 mm of prepreg **3.**

When visually observed, first and second release sheets **2, 2'** were adhered to each other by elastic members **5,** and no resin was observed flowing out of the adhered portions of first and second release sheets **2**, **2'**. The obtained prepreg **3** was cooled by using cooling plate **11** and was passed between haul-off rolls **12** so that first release sheet **2** was removed by peeling-guide rolls **13,** and prepreg **3,** along with second release sheet **2',** was wound by winding device **14.**

Accordingly, 179 mm-wide unidirectional prepreg was obtained. When the unidirectional prepreg was observed visually, no bulging of resin was observed on either edge of the prepreg, and the prepreg was easily peeled from second release sheet **2'** to exhibit ease of handling. In addition, the prepreg was cut into 20 mm-wide (29 mm wide at edges) and 200 mm-long strips. The matrix resin was removed from each strip by using a sufficient amount of acetone, and the dry weight of the reinforcing fiber was measured. The basis weights in fiber strips and the variation coefficient (hereinafter referred to as the variation coefficient of the basis weights in fiber strips) were calculated from the above measured values. The variation coefficient of the basis weights in fiber strips was 2.5%. The prepreg was found to have a uniform basis weight.

### (Comparative Example 1)

As Comparative Example 1, a prepreg was produced under the same conditions as in Example 1 except that elastic members **5** were not used, and 195 mm-wide unidirectional prepreg was obtained. Bulging resin was observed continuously on side edges of the unidirectional prepreg. Because of bulging matrix resin, it was necessary to pay special attention when the unidirectional prepreg was peeled from second release sheet **2'.** In addition, when the variation coefficient of the basis weight in fiber strips was calculated the same as in Example 1 (at edges, the prepreg was cut into 26 mm-wide and 29 mm-wide strips), it was 4.7%.

The above results were listed in Table 1. Here, when the variation coefficient of the basis weights in fiber strips was less than 4%, it was evaluated as "good" and when the variation coefficient was 4% or greater, it was evaluated as "bad." In addition, when no adhesion of resin was observed on both edges in a width direction, it was evaluated as "good" and when resin was adhered continuously, it was evaluated as "bad."

**Table 1**

| | Width of Reinforcing Fiber Sheet (mm) | Supplied Amount | | Width of Prepreg (mm) | Basis Weight of Fiber Strips | | Amount of Resin Adhered to Edges |
|---|---|---|---|---|---|---|---|
| | | Reinforcing Fiber (g/m²) | Matrix Resin (g/m²) | | Variation Coefficient (%) | Evaluation | Evaluation |
| Example 1 | 150 | 800 | 394 | 179 | 2.5 | good | good |
| Comp. Example 1 | 150 | 800 | 394 | 195 | 4.7 | bad | bad |

From the results above, prepreg in Example 1 produced by the production method as described in the first embodiment was found to be a unidirectional prepreg where no resin bulges on the edges and the basis weight of fiber is uniform.

### [Second Example]

An example of the second embodiment is described below.

### <Raw Materials>

Materials used in the present example are listed in the following.
Carbon fiber bundles: brand name "TR50S-15L" made by Mitsubishi Rayon
Matrix resin: epoxy acrylate resin, "NEOPOL® 8051" made by Japan U-Pica Co., Ltd.
Curing agent: a diluted solution of liquid paraffin 1,1-bis(t-butylperoxy) cyclohexane (70% concentration), "PERHEXA® C" made by NOF Corporation
Internal release agent: zinc stearate, made by NOF.
Thickener: modified diphenylmethane diisocyanate, "ISONATE® 143LP" made by Dow Chemical Japan Ltd.
Stabilizer: 1,4-benzoquinone, made by Wako Pure Chemical Industries, Ltd.

### <Preparation of Matrix Resin>

A resin composition was obtained by mixing the above listed resin, curing agent, inner release agent, thickener, and stabilizer at a ratio of 100.0: 10.0:3.0:15.3:0.02. When the viscosity of the resin composition was measured the same as in Example 1, it was 0.3 Pa·s.

### (Example 2)

Chloroprene sponge rubber (Neoprene®) having a porosity of 80% and an Asker C hardness of 25 degrees was processed to produce two annular elastic members 25 with a natural thickness of 5 mm and a natural width of 15 mm.

Using a production apparatus shown in FIG. 3, the width to coat the matrix resin was set at 620 mm by considering a reduction of the resin at edges in a width direction so that the width of a final prepreg satisfying the required specification would be at least 600 mm.

By using a doctor blade method, the matrix resin composition was homogenously coated on a first surface of first release sheet 22 (polyethylene film: a 50 µm-thick poly sheet made by Tokuza K.K.) at a basis weight of 740 g/m². Next, on the matrix resin coated surface (first surface) of first release sheet **22,** reinforcing fiber cut into 25 mm pieces by using cutter 41 was uniformly dispersed and deposited. Moreover, by using a doctor blade method, the matrix resin composition was homogenously coated on a first surface of second release sheet **22'** (a 50 µm-thick poly sheet made by Tokuza) at a basis weight of 740 g/m². Next, the first surface of second release sheet **22'** was laminated to be in contact with reinforcing fiber sheet **21** on first release sheet **22.** Then, reinforcing fiber sheet **21** was compressed by first mesh belt conveyor **42,** and prepreg precursor (B) was obtained.

Prepreg precursor (B) was passed through second and third mesh belt conveyors **43, 44** arranged parallel to each other in a longitudinal direction. Accordingly, prepreg precursor (B) was compressed and the matrix resin composition was impregnated into reinforcing fiber sheet **21.** In addition, the targeted width of a final prepreg was set by aligning the inner edges of elastic members **25** at positions 5 mm outward respectively from both edges of the resin to be coated to have a width of 620 mm, and by providing the elastic members continuously on the second-surface **22b'** side of second release sheet **22'.**

After that, prepreg precursor (B) was recovered by using a recovery device and was kept standing for a predetermined time to increase the viscosity of the matrix resin composition in prepreg precursor (B). Finally, prepreg (SMC) was obtained.

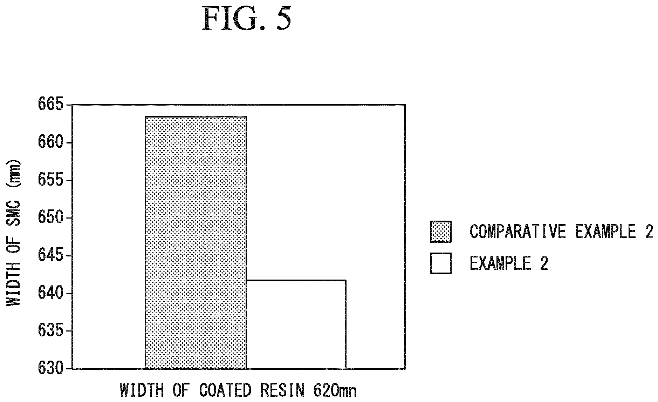

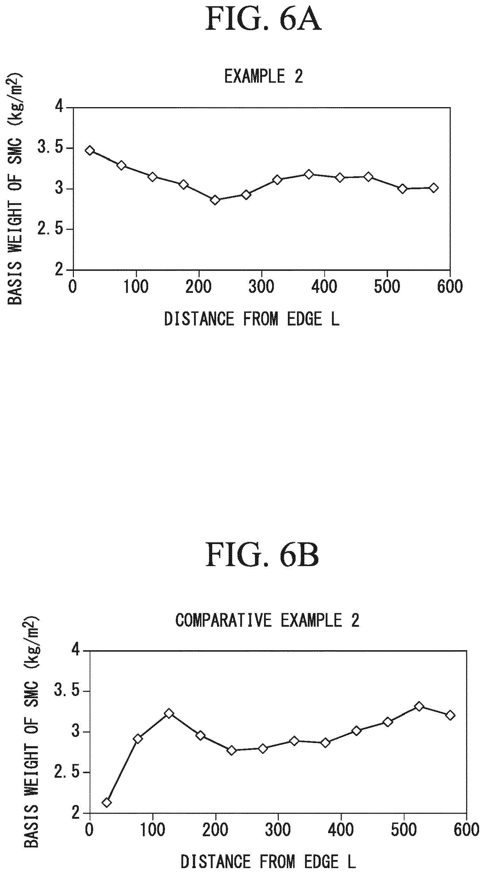

The width of the obtained SMC is shown in FIG. 5. The 600-mm center portion of the obtained SMC was divided into 50 mm-wide strips, and the basis weight of each strip was measured and shown in FIG. 6A.

### (Comparative Example 2)

As Comparative Example 2, an SMC was obtained under the same conditions as in Example 2 except that elastic members **25** were not used. The width of the obtained SMC is shown in FIG. 5. In addition, the 600-mm center portion of the obtained SMC was divided into 50 mm-wide strips, and the basis weight of each strip was measured and shown in FIG. 6B.

As shown in FIG. 5, when the matrix resin was coated to have the same width, the SMC obtained in Example 2 was approximately 20 mm narrower than that obtained in Comparative Example 2. Generally, only a portion having the standard width is considered as an SMC product. Since Example 2 can produce a narrower product than Comparative Example 2, the material is used more effectively in Example 2 when producing products with the same standard width.

Also, as shown in FIG. 6B, when the coated width was set at 620 mm, a significant reduction in the basis weight was observed on the edges of the portion of a 600 mm-wide product (50 mm-wide strip with its center positioned 25 mm from the edge L).

By contrast, in Example 2 shown in FIG. 6A, when the coated width was set at 620 mm, the basis weight was within ±20% of the target basis weight in the entire area of a 600 mm-wide product. Hardly any reduction was observed in the basis weight at the edges.

The variation coefficient of the basis weights was 10.3% in Comparative Example 2, whereas it was 5.1% in Example 2. It was found that products in Example 2 exhibited uniform quality.

The production method in Example 2 is capable of mass producing products at a higher yield than the method in Comparative Example 2.

### [DESCRIPTION OF NUMERICAL REFERENCES]

**1, 1', 21:** reinforcing fiber sheet
**2, 2', 22, 22':** release sheet
**2A, 2A', 22A, 22A':** extended portion
**2a, 2a', 22a, 22a':** first surface of release sheet
**2b, 2b', 22b, 22b':** second surface of release sheet
**3:** prepreg
**5, 25:** elastic member
**38, 38':** compaction roll
(A), (B): prepreg precursor

## Claims

1. A method for producing a prepreg, comprising:
preparing a reinforcing fiber sheet (1) containing multiple reinforcing fiber bundles, a matrix resin composition, and first and second release sheets (2, 2');
forming a prepreg precursor by providing the matrix resin composition on the reinforcing fiber sheet (1); and
sandwiching the prepreg precursor (A) between the first and second release sheets (2, 2') so that first surfaces (2a, 2a') of the first and second release sheets (2, 2') make contact with the prepreg precursor (A) and that the first and second release sheets (2, 2') respectively include extended portions (2A, 2A') that protrude outward from both edges of the prepreg precursor (A) in a width direction;
wherein the method further comprises:
preparing a pair of elastic members (5), wherein the elastic members (5) have a thickness prior to the compression process that is 1 to 10 times greater than a final thickness of a prepreg sheet;
positioning the elastic members (5) to face the extended portions (2A') of the second release sheet (2') and to make contact with a second surface (2b') of the second release sheet (2') to bring the extended portions (2A, 2A') of the first and second release sheets (2, 2') to abut each other; and
compressing the prepreg precursor (A), the first and second release sheets (2, 2') and the elastic members (5) all at once in a thickness direction of the prepreg precursor (A),
wherein the reinforcing fiber sheet is made of unidirectional reinforcing fiber bundles, or wherein the reinforcing fiber sheet is made of short reinforcing fiber bundles two-dimensionally deposited at random, and
a material of the elastic member (5) has an elongation at break of 100% or greater and a Young's modulus of 0.01-40 MPa.

2. The method for producing a prepreg according to Claim 1, wherein the elastic members are set to be continuous in a longitudinal direction of the prepreg precursor.

3. The method for producing a prepreg according to Claim 1 or 2, wherein the elastic members are set to be annular.

4. The method for producing a prepreg according to any of Claims 1 to 3, wherein the tension of the elastic members (5) is controlled by an elastic-member tensioning mechanism.

5. The method for producing a prepreg according to any of Claims 1 to 4, wherein the elastic members are foamed material.

6. The method for producing a prepreg according to any of Claims 1 to 5, wherein lubrication treatment is conducted on the elastic members.

7. The method for producing a prepreg according to any of Claims 1 to 6, wherein the second release sheet is made of a thermoplastic resin film.

8. The method for producing a prepreg according to any of Claims 1 to 7, wherein the reinforcing fiber sheet is made up of a first reinforcing fiber sheet and a second reinforcing fiber sheet, and the method for producing a prepreg further comprises a step for forming the prepreg precursor by coating a matrix resin composition on one surface of the first reinforcing fiber sheet, and by laminating the second reinforcing fiber sheet on the one surface of the first reinforcing fiber sheet.

9. The method for producing a prepreg according to any one of Claims 1 to 8, wherein the method further includes heating the prepreg precursor (A), and
the positioning of the elastic members (5) and the compressing of the prepreg precursor (A) are performed after heating.

## Patentansprüche

1. Verfahren zum Produzieren eines Prepregs, umfassend:
Herstellen eines Verstärkungsfaserflächengebildes (1), das mehrere Verstärkungsfaserbündel, eine Matrixharzzusammensetzung und erste und zweite Trennflächengebilden (2, 2') enthält;
Bilden eines Prepreg-Vorläufers durch Bereitstellen der Matrixharzzusammensetzung auf dem Verstärkungsfaserflächengebilde (1); und
sandwichartiges Anordnen des Prepreg-Vorläufers (A) zwischen den ersten und zweiten Trennflächengebilden (2, 2'), sodass erste Oberflächen (2a, 2a') der ersten und zweiten Trennflächengebilden (2, 2') mit dem Prepreg-Vorläufer (A) in Kontakt kommen und dass erste und zweite Trennflächengebilden (2, 2') jeweils verlängerte Abschnitte (2A, 2A') einschließen, die von beiden Rändern des Prepreg-Vorläufers (A) in einer Breitenrichtung nach außen ragen;
wobei das Verfahren weiter umfasst:
Herstellen eines Paares elastischer Elemente (5), wobei die elastischen Elemente (5) vor dem Kompressionsprozess eine Dicke aufweisen, die 1 bis 10 mal größer ist als eine Enddicke eines Prepreg-Flächengebildes;
Positionieren der elastischen Elemente (5), um den verlängerten Abschnitten (2A') des zweiten Trennflächengebildes (2') zugewandt zu sein und um mit einer zweiten Oberfläche (2b') des zweiten Trennflächengebildes (2') in Kontakt zu kommen, um die verlängerten Abschnitte (2A, 2A') der ersten und zweiten Trennflächengebilden (2, 2') dazu zu bringen, aneinander anzuliegen; und
gleichzeitiges Komprimieren des Prepreg-Vorläufers (A), der ersten und zweiten Trennflächengebilden (2, 2') und der elastischen Elemente (5) in einer Dickenrichtung des Prepreg-Vorläufers (A),
wobei das Verstärkungsfaserflächengebilde aus unidirektionalen Verstärkungsfaserbündeln gefertigt ist, oder wobei das Verstärkungsfaserflächengebilde aus kurzen Verstärkungsfaserbündeln gefertigt ist, die zweidimensional willkürlich aufgebracht sind, und
ein Material des elastischen Elements (5) eine Reißdehnung von 100 % oder mehr und einen Elastizitätsmodul von 0,01-40 MPa aufweist.

2. Verfahren zum Produzieren eines Prepregs nach Anspruch 1, wobei die elastischen Elemente eingestellt sind, in einer Längsrichtung des Prepreg-Vorläufers kontinuierlich zu sein.

3. Verfahren zum Produzieren eines Prepregs nach Anspruch 1 oder 2, wobei die elastischen Elemente eingestellt sind, ringförmig zu sein.

4. Verfahren zum Produzieren eines Prepregs nach einem der Ansprüche 1 bis 3, wobei die Spannung der elastischen Elemente (5) durch einen Spannmechanismus für elastische Elemente gesteuert wird.

5. Verfahren zum Produzieren eines Prepregs nach einem der Ansprüche 1 bis 4, wobei die elastischen Elemente geschäumtes Material sind.

6. Verfahren zum Produzieren eines Prepregs nach einem der Ansprüche 1 bis 5, wobei eine Schmiermittelbehandlung an den elastischen Elementen ausgeführt wird.

7. Verfahren zum Produzieren eines Prepregs nach einem der Ansprüche 1 bis 6, wobei das zweite Trennflächengebilde aus einer thermoplastischen Harzfolie gefertigt ist.

8. Verfahren zum Produzieren eines Prepregs nach einem der Ansprüche 1 bis 7, wobei das Verstärkungsfaserflächengebilde aus einem ersten Verstärkungsfaserflächengebilde und einem zweiten Verstärkungsfaserflächengebilde besteht und das Verfahren zum Produzieren eines Prepregs weiter einen Schritt zum Bilden des Prepreg-Vorläufers durch Beschichten einer Matrixharzzusammensetzung auf einer Oberfläche des ersten Verstärkungsfaserflächengebildes und durch Laminieren des zweiten Verstärkungsfaserflächengebildes auf die eine Oberfläche des ersten Verstärkungsfaserflächengebildes umfasst.

9. Verfahren zum Produzieren eines Prepregs nach einem der Ansprüche 1 bis 8, wobei das Verfahren weiter das Erwärmen des Prepreg-Vorläufers (A) einschließt und
das Positionieren der elastischen Elemente (5) und das Komprimieren des Prepreg-Vorläufers (A) nach dem Erwärmen durchgeführt werden.

## Revendications

1. Procédé de fabrication d'un préimprégné, comprenant :
la préparation d'une feuille de fibres de renforcement (1) contenant de multiples de faisceaux de fibres de renforcement, une composition de résine d'enrobage, et des première et seconde feuilles antiadhésives (2, 2') ;
la formation d'un précurseur de préimprégné par fourniture d'une composition de résine d'enrobage sur la feuille de fibres de renforcement (1) ; et
la mise en sandwich du précurseur de préimprégné (A) entre les première et seconde feuilles antiadhésives (2, 2') de telle sorte que les premières surfaces (2a, 2a') des première et seconde feuilles antiadhésives (2, 2') viennent en contact avec le précurseur de préimprégné (A) et de telle sorte que les première et seconde feuilles antiadhésives (2, 2') respectivement incluent des parties prolongées (2A, 2A') qui font saillie vers l'extérieur à partir des deux bords du précurseur de préimprégné (A) dans une direction de la largeur ;
dans lequel le procédé comprend en outre :
la préparation d'une paire d'éléments élastiques (5), dans lequel les éléments élastiques (5) présentent une épaisseur avant le processus de compression qui est 1 à 10 fois supérieure à une épaisseur finale de la feuille de préimprégné ;
le positionnement des éléments élastiques (5) de manière à ce qu'ils soient en regard des parties prolongées (2A') de la seconde feuille antiadhésive (2') et à ce qu'ils viennent en contact avec une seconde surface (2b') de la seconde feuille antiadhésive (2') pour amener les parties prolongées (2A, 2A') des première et seconde feuilles antiadhésives (2, 2') à buter l'une contre l'autre ; et
la compression du précurseur de préimprégné (A), des première et seconde feuilles antiadhésives (2, 2') et des éléments élastiques (5) simultanément dans une direction de l'épaisseur du précurseur de préimprégné (A),
dans lequel la feuille de fibres de renforcement est constituée de faisceaux de fibres de renforcement unidirectionnelles, ou dans lequel la feuille de fibres de renforcement est constituée de faisceaux de fibres de renforcement courtes en deux dimensions disposés de manière aléatoire, et
un matériau de l'élément élastique (5) présente un allongement à la rupture de 100 % ou plus et un module d'Young de 0,01 à 40 MPa.

2. Procédé de fabrication d'un préimprégné selon la revendication 1, dans lequel les éléments élastiques sont définis pour être continus dans une direction longitudinale du précurseur de préimprégné.

3. Procédé de fabrication d'un préimprégné selon la revendication 1 ou 2, dans lequel les éléments élastiques sont définis pour être annulaires.

4. Procédé de fabrication d'un préimprégné selon l'une quelconque des revendications 1 à 3, dans lequel la tension des éléments élastiques (5) est commandée par un mécanisme de mise en tension d'éléments élastiques.

5. Procédé de fabrication d'un préimprégné selon l'une quelconque des revendications 1 à 4, dans lequel les éléments élastiques sont un matériau expansé.

6. Procédé de fabrication d'un préimprégné selon l'une quelconque des revendications 1 à 5, dans lequel un traitement de lubrification est réalisé sur les éléments élastiques.

7. Procédé de fabrication d'un préimprégné selon l'une quelconque des revendications 1 à 6, dans lequel la seconde feuille antiadhésive est constituée d'un film en résine thermoplastique.

8. Procédé de fabrication d'un préimprégné selon l'une quelconque des revendications 1 à 7, dans lequel la feuille de fibres de renforcement est constituée d'une première feuille de fibres de renforcement et d'une seconde feuille de fibres de renforcement, et le procédé de fabrication d'un préimprégné comprend en outre une étape de formation du précurseur de préimprégné par revêtement de la composition de résine d'enrobage sur une surface de la première feuille de fibres de renforcement, et par stratification de la seconde feuille de fibres de renforcement sur ladite une surface de la première feuille de fibres de renforcement.

9. Procédé de fabrication d'un préimprégné selon l'une quelconque des revendications 1 à 8, dans lequel le procédé inclut en outre le chauffage du précurseur de préimprégné (A), et
le positionnement des éléments élastiques (5) et la compression du précurseur de préimprégné (A) sont réalisés après le chauffage.
